# EUROPEAN PATENT APPLICATION

(11) **EP 4 386 204 A1**
(43) Date of publication of application: **19.06.2024**
(21) Application number: 22214266.3
(22) Date of filing: 16.12.2022
(51) Int. Cl.: F03D 13/40

(54) **A SUPPORT FIXTURE FOR A WIND TURBINE PART**

(71) Applicant: Thomas Group Manufacturing A/S, 8210 Aarhus (DK)
(72) Inventor: Madsen, Thomas Schmidt, 8210 Aarhus V (DK)
(74) Representative: Dragsted Partners A/S

(57) **Abstract**

The present intention relates to a support fixture for a wind turbine part comprising a first frame element having a first support section configured to support at least part of the wind turbine part and at least a first connecting part, a second frame element having a second support section configured to support at least a part of the wind turbine part and at least a second connecting part configured to connect with the first connecting part of the first frame element, a securing assembly having a first operational state where the first frame element is secured to the second frame element, and a second operational state where the first frame element can be disconnected from the second frame element, the securing assembly comprises a first locking member having a first longitudinal axis, where the first locking member is connected via a pivotal connection having a pivot axis to the first frame element, and the securing assembly comprises a second locking member connected with the second frame element configured to receive the first locking member in the second operational state.

## Description

### Technical Field

Support fixture for a wind turbine part comprising: a first frame element having a first support section configured to support at least part of the wind turbine part and at least a first connecting part, a second frame element having a second support section configured to support at least a part of the wind turbine part and at least a second connecting part configured to connect with the first connecting part of the first frame element.

### Description

The transport of wind turbine parts from the location of manufacturing to a storing location or to a location where a wind turbine is to be mounted requires a special set of logistical requirements. Due to the shape, size and weight of the wind turbine parts, there are demands for special equipment to ensure that the parts do not get damaged during transport. The constant increase in the demand for more effective wind turbines in order to face the climate changes, have caused the wind turbine manufacturers to respond by increasing both the height of the wind turbines as well as the diameter of the wind turbines, which in turn also increases the length and diameter of the blades.

This increase in length of the wind turbine blades, as well as the general size of tower parts, means that the diameter of the root section of the wind turbine blade, i.e. the section that connects with the rotor hub, is of a size where it may be difficult to handle the blade during transport. Thus, in order to ensure an efficient wind turbine part transport and handling, it may be necessary to utilise wind turbine part support and transportation devices which may be arranged, e.g. at the root and/or the tip of a wind turbine blade, where the support and transportation devices may be in the form of frames. The frames may be in the form of stackable frames, which allow the frames, and thereby the wind turbine blades, to be stacked during transport, allowing the wind turbine blades to be supported in a substantially horizontal position during transport, where one blade may be stacked on top of another blade. This allows a plurality of blades to be stacked, e.g. on board of a transport vessel, without risking that the blades are damaged during transportation.

A single transport frame for e.g. a root of a wind turbine blade is often provided in the form of a frame having a bottom part, as well as side parts, and where the root is positioned on a root seat. Such a transport frame may e.g. be seen in WO 2017/114532, where the frame has an open top, allowing the root to be positioned vertically into the root seat, and where a second frame for a second wind turbine blade may be stacked on top of the open top part of the frame. The root of the wind turbine blade may be secured in the frame by securing a plurality of root bolts to the frame. However, by providing a transport frame that is open in the top portion, thereby exposing a top part of the root means that an incorrect positioning of one frame relative to a second frame that is to be stacked on top of the first frame creates a risk that the root may be damaged should the alignment of the frames be incorrect. Furthermore, the open top of the frame means that the top part of the frame may be unstable, and if the transportation of the blade is under rough conditions, such as at sea, this may create a serious risk that the top of the frame may collapse.

Thus, there is a need for an improved transport frame for wind turbine parts, where the disadvantages of existing transport frames may be overcome.

In accordance with the invention, there is provided a support fixture for a wind turbine part comprising: a first frame element having a first support section configured to support at least part of the wind turbine part and at least a first connecting part, a second frame element having a second support section configured to support at least a part of the wind turbine part and at least a second connecting part configured to connect with the first connecting part of the first frame element, a securing assembly having a first operational state where the first frame element is secured to the second frame element, and a second operational state where the first frame element can be disconnected from the second frame element, the securing assembly comprises a first locking member having a first longitudinal axis, where the first locking member is connected via a pivotal connection having a pivot axis to the first frame element, and the securing assembly comprises a second locking member connected with the second frame element configured to receive the first locking member in the second operational state.

Within the understanding of the present disclosure, the support fixture may be seen as a fixture that is capable of supporting a wind turbine part. The support fixture may be seen as a transport fixture, storage fixture, hoisting fixture, lifting fixture, etc.

By having a support fixture that comprises a first frame element and a second frame element, the first frame element and the second frame element may be assembled to a transport state to protect the outer surface of the part of the wind turbine part which is supported by the support fixture. When the first connecting part of the first frame element is connected to the second connecting part of the second frame element, the parts may initially be held in their position due to the weight of the frame elements. Thus, when assembled, one of the frame elements may be seen as the lower frame element, and the other frame element may be seen as the upper frame element. Thus, when the connecting parts are engaged, the force of gravity that affects the upper frame element to the connecting parts may hold the two frame elements in their position. However, in order to ensure that the first frame element and the second frame element are capable of safely protecting and supporting the wind turbine part even in rough and/or under tilted conditions, the first frame element may be secured to the second frame element, thereby ensuring that the two frame elements are securely attached to each other during transport of the wind turbine part.

The securing assembly may comprise a first locking member, where the first locking member is pivotally connected to the first frame element, and where the second frame element comprises a second locking member, which is configured to engage with the first locking member to ensure that the first frame element is securely attached to the second frame element. The first locking member may be an elongated part having a longitudinal axis, where the elongated part may extend from the first frame element and come into engagement with the second locking member which is on the second frame element. In the first state of the securing assembly, the locking member may extend from the first frame element to the second frame element, where a first end of the locking member is secured to the first frame element via the pivotal connection, and where the second end of the locking member is secured to the second frame element via the second locking member. Thus, the longitudinal axis of the locking member may be in a direction that extends from the first frame element to the second frame element. However, in the second state of the securing assembly, where the first frame element is not secured to the second frame element, the longitudinal axis of the locking member may be directed in a direction away from the second locking member via the pivotal connection. Thus, the first locking member may be pivoted from its first position (in the first state) and in a direction away from the second locking member and/or the part of the second frame element holding the second locking member, thereby releasing the second end of the locking member from the second locking member.

Thus, the transition of the securing assembly from its first operational state to its second operational state may be performed by pivoting the first locking member in a direction away from the second locking member, where the transition of the securing assembly from its first state may be performed by pivoting the first locking member in a direction towards the second locking member.

Thus, parts of the securing assembly may be integral parts of the first frame assembly and the second frame assembly, which means that it is not necessary to remove any of the parts of the securing assembly from the first frame element and/or the second frame element when transitioning from the first operational state to the second operational state, and vice versa.

The support (transport) fixture for the wind turbine part may be a relatively large structure, as the size of the wind turbine part may be very large, which means that the weight and size of the fixture is significant and requires hoisting and lifting appliances to assist with the movement of the pieces from one place to another. The support (transport) fixture in an assembled state may have a size that is between 5-9 metres in height and width, while the depth of the fixture may be between 2 and 4 metres. The transport fixture may be constructed from a steel alloy or other metal alloys that are capable of supporting such wind turbine parts, which means that the weight of the transport fixture is high. Thus, it is important that the securing assembly is capable of withstanding large forces, as any movement of the first frame element relative to the second frame element involves significant forces. The first locking member may be made out of steel alloy or a strong metal alloy, which means that it may have a weight which makes it unsuitable for workers to carry the locking member from one position to another position, which means that it is advantageous that the locking member is attached to the support fixture. Thus, the workers that are assembling or disassembling the support fixture do not have to physically lift the locking member away from the support fixture, and store it separately from the fixture.

In one example, the locking member may have length that is between 40-100 cm long, may have a diameter of between 40-70 mm, may be made out of reinforced steel, and may have a weight between 12-25 kg. In accordance with safety regulations, it is recommended that a worker does not carry a part that is in the excess of 10 kg due to safety risks for the worker. Thus, by attaching the first locking member using a pivotal connection to the support fixture and not requiring the removal of the first locking member relative to the first frame element, the worker only has to pivot the first locking member and thereby only apply a force necessary to pivot the first locking member in a direction towards the second locking member when the securing assembly is to be positioned in its first operational state. In previous applications, where two parts of a support fixture have to be assembled, the securing of the two parts has been made using locking members that are separated from the frame and have to be carried into their position to engage the connection between the first frame element and the second frame element. Providing a locking member attached to the support fixture ensures the safety of the workers that are assisting in the transport and/or storage of the wind turbine part is better than when using existing securing assemblies.

In one exemplary embodiment, the first frame element may comprise a first connection interface comprising the first connecting part, and the second frame element may comprise a second connection interface comprising the second connecting part, where the first connection interface mates with the second connection interface when the support fixture is in an assembled state.

In one exemplary embodiment, the first locking member may be configured to be pivoted from its first position to its second position when releasing the securing assembly from its first operational state, and vice versa. The first locking member may be pivotally connected to the first frame element, where the pivotal connection secures the first end of the locking member to the first frame element, and the first locking member may be pivoted, so that the longitudinal axis of the locking member pivots along the pivotal axis, and the second end of the locking member moves in a direction towards the second locking member, until it comes into contact with the second locking member, where the second locking member may be utilised to secure the first locking member in its locking position, thereby providing a connection between the first frame element and the second frame element and securing the first frame element to the second frame element.

In one exemplary embodiment, the first frame element and the second frame element comprise a transverse extension, a longitudinal extension and a vertical extension, where the vertical extension of the first frame element is coextensive with the vertical extension of the second frame element when the first and second frame elements are assembled for a transport state. The vertical section may comprise a first end and a second end, where the first end comprises the first and/or the second connecting part of the first and/or the second frame element, and the second end may be connected to the transverse extension of the frame element. The first ends of the vertical element are positioned to face each other, so that the second ends of the vertical elements face away from each other, and the transverse section may define an outer periphery of the support fixture, which may be connected via the vertical extension that also may define an outer periphery of the support fixture. Thus, when the first frame element and the second frame elements are connected to each other, a longitudinal axis of the vertical extension of the first frame element extends coaxially with a longitudinal axis of the vertical extension of the second frame element. The longitudinal section may extend from one transverse section and/or vertical section to another transvers section and/or vertical section. Thus, the second end of one vertical section may be connected to at least one transverse section and at least one longitudinal section.

In one exemplary embodiment, the first frame element and the second frame element may define a support volume, where a part of the wind turbine part may be carried when the two support sections are assembled and/or secured to each other. When the first frame element and the second frame elements are attached to each other, the outer periphery of the first frame element and the second frame element may define a support volume, where the support volume may be utilised to receive a wind turbine part, such as a root part of a wind turbine blade, so that at least part of the root part of the wind turbine blade may be positioned inside the support volume of the first frame element and the second frame element. This ensures that the peripheral parts of the first frame element and/or the second frame element may be utilised to protect the wind turbine part and to ensure that when the wind turbine parts are stacked, the stacking force is not transferred to the wind turbine part, but is directed around the wind turbine part. Thus, the weight of the wind turbine part is applied to the frame elements, but where the weight of the frame is not transferred to the support fixture.

In one exemplary embodiment the securing assembly may comprise a plurality of first securing parts and second securing parts. The first connection interface and the second connection interface that are connected to each other when the support fixture is assembled may have a substantially rectangular shape, where one connection part is arranged in each of the four corners of the rectangular shape, and where the connection parts of the first frame element mate with the connection parts of the second frame element. Thus, the first frame element is connected to the second frame element at four positions. In order to secure the first frame element securely to the second frame element and to ensure that any external forces cannot separate the first connection interface from the second connection interface, the securing assembly may comprise a plurality of first securing parts and matching second securing parts to ensure that both connection interfaces cannot move relative to each other. In one example, the securing assembly may comprise four first securing parts and four second securing parts, where each pair is positioned close to each corner of the rectangular shape of the connection interface. Thus, the securing assembly comprises four positions, where the first frame element is secured to the second frame element, thereby ensuring that any external force cannot move the first frame element relative to the second frame element.

In one exemplary embodiment, the first securing part and/or the second securing part are positioned within the outer periphery of the support fixture. Thus, each securing part may be positioned inside the support volume of the support fixture (first frame element and second frame element), thereby protecting the first securing part and/or the second securing part from external influence.

In one exemplary embodiment, the first locking member may pivot relative to the first frame element between the first operational state and the second operational state of the securing assembly, and vice versa. The first locking member may be pivotally connected to the first frame element, where the pivotal connection secures the first end of the locking member to the first frame element, and the first locking member may be pivoted, so that the longitudinal axis of the locking member pivots along the pivotal axis, and the second end of the locking member moves in a direction towards the second locking member, until it comes into contact with the second locking member, where the second locking member may be utilised to secure the first locking member in its locking position, thereby providing a connection between the first frame element and the second frame element and securing the first frame element to the second frame element.

In one exemplary embodiment, the securing assembly may further comprise at least a third locking member configured to secure the first locking member in its position in the first operational state. The third locking member may be configured to interact with the first locking member and/or the second locking member, where the third locking member may be utilised to secure the first locking member relative to the second locking member. The third locking member may prevent the first locking member to pivot from the first operational state, where the third locking member may apply a locking force to the first locking member. The third locking member may also be configured to interact with the second locking member, so that the third locking member interacts with the first locking member and the second locking member and ensures that the first locking member cannot move relative to the second locking member when the first locking member is in the first operational position.

In one exemplary embodiment, the third locking member may be configured to provide a tension force extending from the first frame element and to the second frame element. The third locking member may comprise a locking nut having an internal thread, where the first locking member may comprise an outer thread that matches the inner thread of the locking nut. The second locking member may be provided with a locking surface, where the locking surface may face away from the pivotal connection of the first locking member. Thus, when the first locking member is in its first operational position and engaged with the second locking member, the locking nut may be utilised to interact with the locking surface, and upon rotation of the nut, the locking nut may move in a direction towards the first end of the first locking member, and when the locking nut comes into contact with the locking surface, the position of the locking nut is fixed in a direction along the rotational axis of the locking nut, and an increased rotation of the locking nut will pull the first end of the first locking member in a direction towards the nut. As the first locking member and the second locking members are fixed relative to the first frame element and the second frame element, respectively, the increased rotation of the nut and the torque applied to the nut is transferred into a tensional force between the first frame element and the second frame element, thereby pulling the two elements towards each other. Thus, when the locking nut has been tightened by rotation the first locking member will be under a tension force and maintain the position of the first frame element relative to the second frame element.

In one exemplary embodiment, the first locking member may be an elongated member and may have a first end being pivotally connected to the first frame element and a second end may be configured to connect to the second locking member of the second frame element. The first locking member may have a length that is sufficient to extend from the pivotal connection to the second locking member so that the second end of the first locking member may be in engagement with the second locking member and may securely fix the first frame element to the second frame element.

In one exemplary embodiment, an outer surface of the second end of the first locking member may comprise threads. The outer surface of the second end may be configured to be in cooperation with a locking nut having mating threads, where the locking nut may be rotated along its rotational axis allowing it to move along the longitudinal axis of the first locking member. The outer thread of the first locking member may be utilised to facilitate the securing the first locking member relative to the second locking member.

In one exemplary embodiment, the first frame element may comprise a first alignment member and/or where the second frame element may comprise a second alignment member. The alignment members of the first frame and/or the second frame may be cooperating alignment members, where one alignment member may have a female shape, while the opposing alignment member may have a male shape, allowing the male shape to slot into the female shape to align the first frame element relative to the second frame element. Thus, when the first frame element is positioned to be connected to the second frame element, the alignment members may be utilised to ensure that the first frame element is positioned correctly relative to the second frame element. Thus, the alignment member may also be utilised to ensure that the first locking member aligns in the correct position relative the second locking member, and vice versa. The alignment members may be provided at the connection interface between the first frame element and the second frame element. The first frame element and/or second frame element may further be provided with a third alignment member and/or a fourth alignment member, where the third and fourth alignment members may be positioned at an outer periphery of the support fixture in order to allow the third or fourth alignment members to interact with alignment members on a second support fixture, where the second support fixture may be utilised to stack a second support fixture on top of the first support fixture. Thus, the support fixtures may be stacked on top of each other, where third and fourth alignment members ensure that the second support fixture is positioned correctly relative to the first support fixture.

In one exemplary embodiment, the first locking member may comprise a pivot locking member configured to lock the pivotal movement of the first locking member relative to the first frame element. The pivot locking member may be configured to lock the first locking member when it is in cooperation with the second locking member and/or to lock the first locking member when it is in a pivotal position away from the first frame element and/or the second locking member. The pivot locking member may be utilised to secure the first locking member in the second operational state. This may be advantageous, as the first locking member may be very heavy and if the first locking member rotates unintentionally after it has been released from the first locking member, it may cause an accident to the worker that may be operating the securing assembly. The pivot locking member may be engaged prior to the first locking member being released from the second locking member, subsequently the first locking member may be released from the second locking member. While this is being performed, the pivot locking member will ensure that the first locking member will maintain its position and cannot move unintentionally and thereby may be able to prevent an accidental damage to material or personnel, as the first locking member may be heavy and can cause serious injuries to personnel if it pivots uncontrollably. When the first locking member has been released from the second locking member, the pivot locking member may be released, and the first locking member may be controllably pivoted from the first operational position to the second operational position, where the first locking member is pivoted away from the second locking member. The pivot locking member may further be utilised to lock the first locking member in the second operational position to ensure that it does not move relative to the first frame element during transport or via external forces, reducing the risk of damaging equipment and personnel.

In one exemplary embodiment, wherein the securing assembly in its first operational state may prevent the first frame element to be moved relative to the second frame element, and/or where the securing assembly in its second operational state may allow the first frame element to be moved relative to the second frame element. The first operational state may be utilised to transport wind turbine parts, where the frame elements are attached to each other and ensure that the wind turbine part which is introduced into the support fixture are protected. In the second operational state, the support fixture may be prepared to receive a wind turbine part and/or may be configured to allow a wind turbine part to be removed from the support fixture, where the first frame element may be removed from the second frame element to allow access to the wind turbine part support of the support fixture.

In one exemplary embodiment, the second locking member may comprise a first slot configured to receive the first locking member, where the slot may comprise a second longitudinal axis that is parallel and/or coaxial with the first longitudinal axis of the first locking member. The first locking member may be an elongated member, which when pivoted in the direction towards the second locking member may be positioned in a slot provided by the second locking member, where the slot may have an access that is parallel to the longitudinal axis of the slot, allowing the slot to receive the first locking member via pivoting movement. The slot may have a bottom and side walls to prevent the first locking member from moving in any other direction other than the pivoting movement, thereby preventing the first locking member from being damaged or bent when inside the slot. The slot may be configured to align the first locking member correctly relative to the second locking member in order to prepare the second locking member to secure the first locking member in its correct position.

In one exemplary embodiment, the first locking member may comprise a second slot configured to receive the first locking member, where the slot may comprise a third longitudinal axis that is parallel and/or coaxial with the first longitudinal axis of the first locking member. The second slot may be utilised to control the pivotal movement of the first locking member, so that when the first locking member pivots relative to the first frame element, the slot may prevent the first locking member to rotate or tilt relative to the pivot axis.

In one exemplary embodiment, wherein the first slot and the second slot are arranged so that the second longitudinal axis and the third longitudinal axis may be coextensive. Thus, when the first locking member is in the first operational position, the first locking member is positioned in the first slot and the second slot to ensure that the second locking member may be prepared to lock the first locking member in its first operational position.

### Brief description of the drawings

The following is an explanation of exemplary embodiments with reference to the drawings, in which:
Figs. 1A and Fig. 1B show a perspective view of a support fixture for a wind turbine part in accordance with the present disclosure,
Figs. 2A-2E show a perspective view of the securing assembly in accordance with the present disclosure,
Figs. 3A and3B show a perspective view of an embodiment of the securing assembly in accordance with the present disclosure,
Figs. 4A and 4B show a perspective view of an embodiment of a pivot locking member in accordance with the present disclosure, and
Fig. 5 shows a perspective view of a plurality of support fixtures in a stacked configuration.

### Detailed description

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

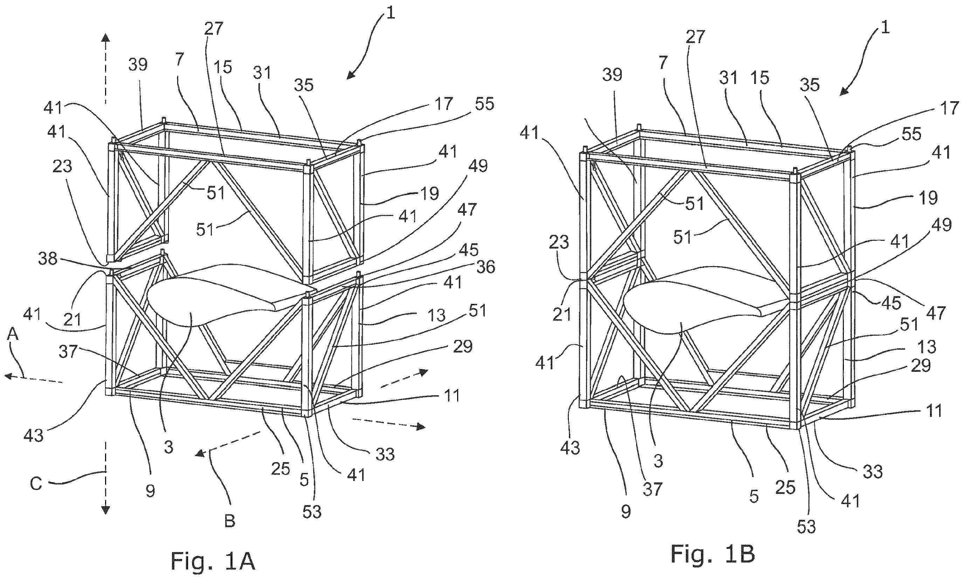

Fig. 1A shows a support fixture 1 for a wind turbine part 3, where the present example shows that the support fixture holds a section of a wind turbine blade 3, where the illustration only shows a cut out of the wind turbine blade 3 and the part of the wind turbine blade 3 that comes into interaction with the support fixture 1.

The support fixture 1 comprises a first frame element 5 and a second frame element 7, where the first frame element 5 in this example is shown as being a lower support frame for the wind turbine blade 3 and the second frame element 7 is shown as being an upper support frame for the wind turbine blade 3. The first frame element 5 comprises a transverse section 9 extending in a transverse direction A, a longitudinal section 11 extending in a longitudinal direction B, and a vertical section 13 extending in a vertical direction C (the vertical direction may also be a height direction). The second frame element 7 comprises a transverse section 15 extending in a transverse direction A, a longitudinal section 17 extending in a longitudinal direction B, and a vertical section 19 extending in a vertical direction C. The first frame element 5 and the second frame elements define a first connection interface 21 and a second connection interface 23, where the first and second connection interfaces may be seen as planar interfaces that extend in the transverse direction A and the longitudinal direction B, where the first frame element 5 and the second frame element 7 are configured to be connected to each other, and where the first connection interface 21 and the second connection interface 23 may abut each other or be coplanar when the first frame element 5 is connected with the second frame element 7, as seen in Fig. 1B.

In the following, reference will be made to the first frame element 5, where the same elements may also be found in the second frame element, and where reference numbers showing the same elements in the second frame element will be included. The first frame element 5 may comprise a first transverse member 25, 27 and a second transverse member 29, 31, where the two members are separated along the longitudinal direction by a first longitudinal member 33, 34, 35, 36 and a second longitudinal member 37, 38, 39, 40 where the length of the longitudinal members 33, 35, 37 and 39 define the distance between the transverse members 25, 27, 29, 31, which in turn defines the length (depth) of the support fixture 1. The first frame element 5 comprises a plurality of vertical members 41, which define the height of the frame element 5, where the vertical members are connected with at least one transverse member and at least one longitudinal member at the second end 43 of the vertical member. The vertical member 41 of the first frame element 5 comprises a first end 45 where the first end comprises a first connection member 47, and where the vertical member 41 of the second frame element 7 comprises a first end 45 having a second connection member 49, where the first connection member 47 and the second connection member 49 are configured to mate with each other. In this example, the first connection member 47 is in the form of a protrusion 47 and the second connection member is in the form of an opening 49 where the protrusion 47 is configured to mate with the opening. When the two frame elements 5, 7 are connected to each other, the vertical members 41 of the first frame element 5 are coextensive with the vertical members 41 of the second frame element 7, where the combined length of the vertical members 41 define the vertical extension of the support fixture 1, as seen in Fig. 1B. As may be seen in Fig. 1B the first connection member 47 and the second connection members connect to each other at the connection interfaces 21, 23, so that the connected frame elements 5, 7 define the support fixture 1 for a wind turbine part 3 (wind turbine blade). In this example, the first frame element 5 comprises four first connection elements 47 and the second frame element comprises four matching second connection elements 49.

The first frame element 5 and the second frame element 7 may be provided with one or more reinforcement members 51 that may extend from one of the transverse member, longitudinal member and/or vertical member to one or more of the other of the transverse member, longitudinal member and/or vertical members to provide increased rigidity to the first frame element 5 and/or the second frame element 7.

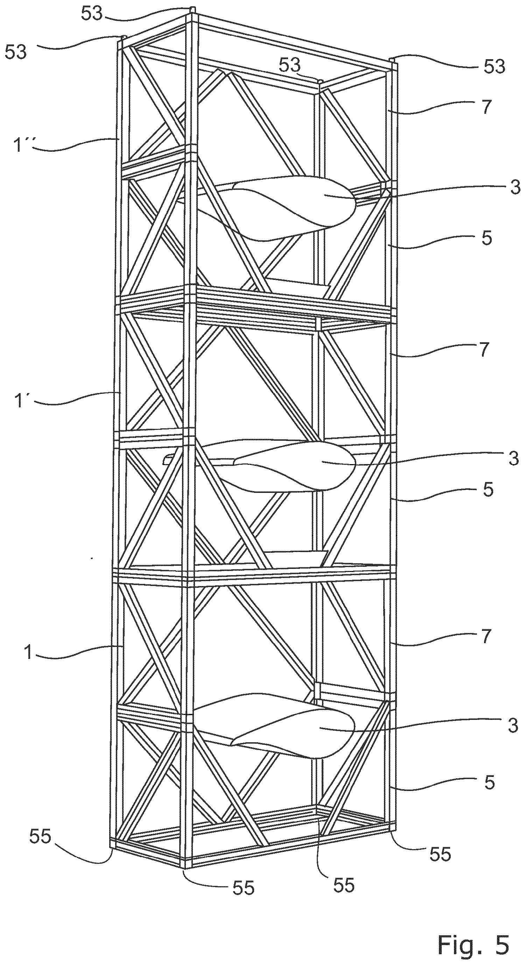

The first frame element 5 may further comprise a third connection element 53, and the second frame element may further comprise a fourth connection element 55, where the third connection element 53 and the fourth connection element are in the form of an opening 53 and a protrusion 55 configured to mate with each other. This may allow a second support fixture 1, e.g. being identical to the first support fixture 1 to be connected to the second frame element 7, thereby allowing a second support fixture (not shown) may be stacked on top of the first support fixture 1, as seen e.g. in Fig. 5.

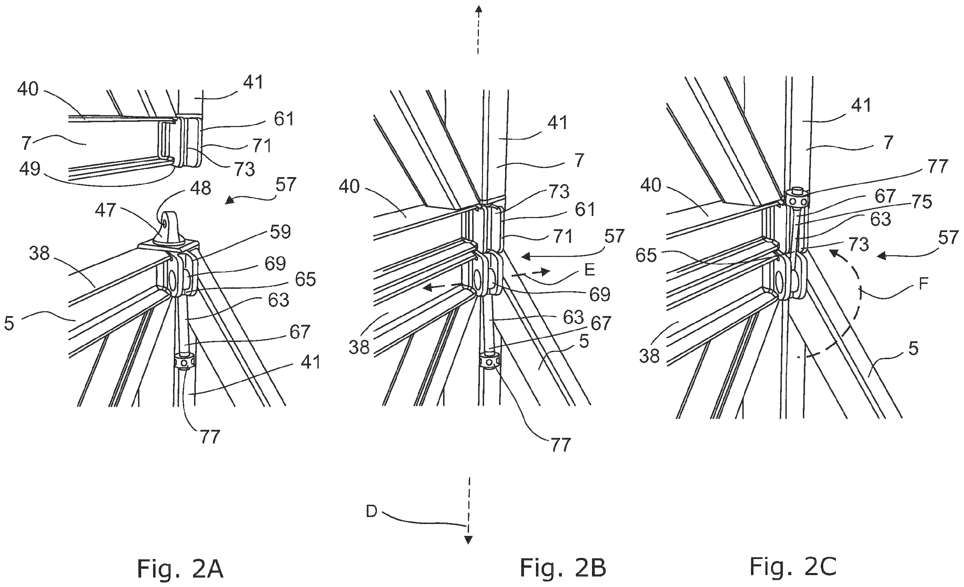

Fig. 2A shows a first frame element 5 and a second frame element 7 separated from each other in the vertical direction (C in Fig. 1) where the present view shows one corner of the connection interface between the first frame element 5 and the second frame element. In this figure, the securing assembly 57 is in its second operational state. The support fixture 1 shown in Figs. 1A and 1B may comprise a connection interface having four corners, where the disclosure in Figs. 2A-2E may be applied to all four corners of the connection interface between the first frame element 5 and the second frame element.

The first frame element 5 comprises a first locking member 59 which is part of the securing assembly 57 of the support fixture 1, where the second frame element 7 comprises another part of the securing assembly 57 in the form of a second locking member 61. The first locking member 59 may be in the form of an elongated member 63 having a first end 65 and a second end 67, where the first end 65 is connected to a vertical member 41 of the first frame element 5 via a pivotal connection 69. The second locking member 61 may be in the form of a bracket 71 having a groove 73 where the groove 73 is configured to receive the elongated member 63.

The first frame element 5 comprises a first connection member 47, and the second frame element 7 comprises a second connection member 49, where the first connection member 47 and the second connection member 49 are aligned vertically on top of each other, and where the distance between the first connection member 47 and the second connection member 49 is reduced to connect the first frame element 5 to the second frame element 7, as shown in Fig. 2B (and Fig. 1B). The first connection member 47 may be provided with a hoisting opening 48 (hoisting part) where a hooking assembly from a crane may be connected to the hoisting opening, in order to allow the first frame element to be hoisted by a crane. The first connection member 47 and the hoisting opening may have a connection axis that may be arranged to be angled at approximately 45 degrees relative to the longitudinal axis of the first longitudinal member 33, 34, 35, 36 and/or a second longitudinal member 37, 38, 39, 40, as well as the transverse members 25, 27, 29, 31, so that when a hoisting assembly is attached to the first frame element and/or the second frame element in all four corners, the axis of the first connection member and/or the hoisting opening will point towards a central area of the support fixture to allow the crane to attach to one point, while the hoisting assembly connects to the four vertical members 41 via the connection member 47. The connection member on the second frame element may also have a

Fig. 2B shows how protrusion 47 (Fig. 2A) of the first frame element 5 has been introduced into the opening 49 (connection member) (Fig. 2A) of the second frame element 7, so that the vertical member 41 of the first frame element 5 and the vertical member 41 of the second frame element 7 are coextensive and aligned, so that the longitudinal axis D of the vertical members 41 are coextensive or coaxial, where the combined length of the vertical members 41 define the height of the support fixture 1 (as seen in Fig. 1B).

Thus, the longitudinal member 38 of the first frame element 5 and the longitudinal member 40 of the second frame element 7 are positioned in an abutting position, where the longitudinal member 40 of the second frame element 7 lies on top of the longitudinal member 38 of the first frame element 5.

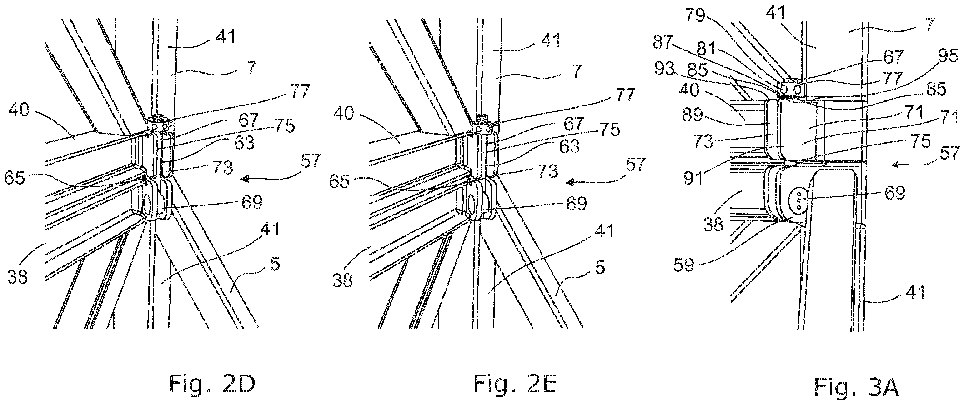

The groove 73 of the bracket 71 has been aligned with the rotational axis of the elongated member 63, so that when the elongated member 63 is pivoted in an upwards direction F, as shown in Fig. 2C, the body 75 of the elongated member is inserted into the groove, where the second end 67 of the elongated member 63 extends beyond the length of the groove 73, allowing a third locking member 77 to be positioned on top of the bracket 71, as seen in Fig. 2D, where the longitudinal axis of the elongated member is substantially parallel to the longitudinal axis D of the vertical members 41.

When the elongated member 63 has been pivoted into its upright position (as shown in Fig. 2D), the third locking member 77 may be manoeuvred in the direction of the first end 65 of the elongated member 63, so that the third locking member 77 comes into contact with the upper part of the bracket 71 and fixes the first locking member 59 relative to the second locking member 61, as shown in Fig. 2E, where the securing assembly 57 is in its first operational state. By reversing the action shown in Figs. 2A-2E, the securing assembly may be transformed from its first operational state to its second operational state.

Fig. 3A shows the securing assembly 57 of the support fixture 1 from a different perspective view than what is shown in Figs. 2A-2E. The bracket 71 of the second locking member 61 has a first bracket part 89 and a second opposing bracket part 91 defining the groove 73, where the groove has a size that allows the body 75 of the elongated member 63 to be positioned inside the groove, while the longitudinal axis of the elongated member has a vertical position, where the second end 67 of the elongated member 63 extends beyond the groove and the top surface 93 of the bracket 71, allowing the third locking member 77 to be positioned above the top surface 93.

The third locking member 77 may have an outer surface 79 and a bore having inner surface (not shown) having a helical thread, where the outer surface of the second end 67 of the elongated member 63 has an outer surface having a thread 81 matching the helical thread of the third locking member. Thus, when the elongated member is pivoted into its locking position, as shown in Figs. 2C and 2E, the third locking member may be positioned close to the second end 67 of the elongated member, allowing the third locking member to pass a vertical projection 83 which is positioned on the top surface 93 on the first bracket part 89 and/or the second bracket part 91. The first bracket part 89 and/or the second bracket part may have a locking surface 95, which is in a vertically lower position than the projection 83. In the position shown in Fig. 3A, there is a first distance 85 (gap) between the third locking member 77 and the locking surface 95. The third locking member may comprise engagement parts 87, allowing a tool to engage the third locking member 77 to assist with a rotational movement of the third locking member 77. The third locking member 77 may alternatively formed in any manner, such as in the form of a nut and the elongated member may have a cooperating outer thread 81.

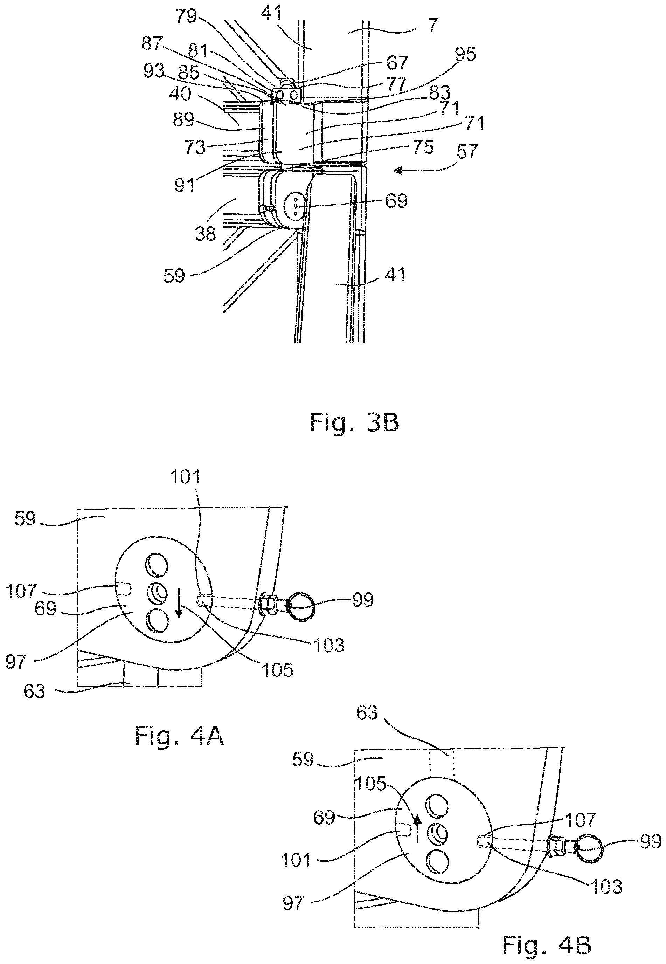

Fig. 3B shows the securing assembly 57 in its first operational state, where the first frame element 5 is secured to the second frame element 7. In this embodiment, the third locking member 77 has been rotated so that the third locking member has moved in a direction towards the first end 65 of the elongated member, where the gap 85 shown in Fig. 3A has been eliminated. Thus, the third locking member 77 engages the locking surface 95 of the bracket 61, and where a tension force is applied between the bracket and the elongated member 63 and the third locking member, thereby providing a pulling force between the first frame element 5 towards the second frame element 7. The projection 83, which is positioned distal to the third locking member 77, prevents the elongated member 63 from pivotal movement, where the ridge of the projection prevents the third locking member to travel in a direction away from the vertical member 41 of the second frame element 7, thereby ensuring that the elongated member is securely fixed in its first operational state and ensuring that the securing assembly securely fastens the first frame element 5 to the second frame element 7.

Fig. 4A shows a pivotal connection 69 of the first locking member 59, where the pivotal connection 69 comprises a first pivot locking member 97 (first locking member) and a second pivot locking member 99. The first pivot locking member 97 is rotationally fixed to the elongated member 63 as shown in e.g. Fig. 2A, so that when the elongated member 63 is pivoted along its pivotal axis E (seen in Fig. 2B) the first pivot locking member 97 may also rotate along the same rotational axis. The first pivot locking member may comprise a first locking groove 101 which may be rotated from a first position (as seen in Fig. 4A) to a second position (as seen in Fig. 4B). The second pivot locking member 99 may comprise an engagement part 103, which engages with the first locking groove 101 to prevent movement in the direction of rotation of the first pivot locking member 97 and the elongated member 63, so that the engagement part 103 prevents the pivotal movement of the elongated member when the second pivot locking member 99 is in its locking position. When the second pivot locking member 99 has been removed from the first pivot locking member 97 the first pivot locking member may be freely rotated along the rotational axis, thereby allowing the elongated member 63 to be rotated so that the securing assembly is transformed from its first operational state (as seen in Fig. 2E) to its second operational state (as shown in Fig. 2A). When the elongated member 63 has been rotated, the first locking groove has moved in a rotational direction to a second position, as shown in Fig. 4B. The second pivot locking member 99 may be attached to the first pivot locking member 97, so that the engagement part 103 engages with a second locking groove 107, thereby preventing the first pivot locking member 97 and thus the elongated member 63 from being rotated back to the position as shown in Fig. 4A. Thus, the second pivot locking member 99 prevents the pivotal movement of the elongated member 63, so that the securing assembly 57 (seen in Fig. 2A-2E) cannot be transformed from its second position to its first position until the second pivot locking member 99 has been removed from the first pivot locking member 97. Thus, the pivot locking members 97, 99 prevent any unintentional pivotal movement of the elongated member 63 and allow the user to securely remove the second pivot locking member 99 to transform the elongated member from the securing assembly's first operational state to the second operational state, and vice versa. The arrow 105 is illustrated in order to show the direction of the elongated member 63 in view of the rotational position of the first pivot locking member. The second pivot locking member 99 may be moved in the direction of its longitudinal axis in a direction away from the first locking groove 101 and/or the second locking groove 107 to disengage the engagement part from the locking grooves 101, 107.

Fig. 5 shows a plurality of support fixtures 1, 1', 1‴ stacked on top of each other, thereby allowing a plurality of wind turbine parts 3 to be stacked on top of each other. Each support fixture 1, 1', 1" may have at least one third connection element 53 and at least one cooperating fourth connection element 55, where the second frame element 7 may have a third connection element 53, and a first frame element 5 may have a fourth connection element 55. Thus, the third connection element 53 of the second frame element 7 of the first support fixture 1 may engage with a fourth connection element 55 of a first frame element 5 of a second support fixture 1', where the second support fixture 1' is positioned on top of the first support fixture 1. The same may be stated about the third support fixture 1" on top of the second support fixture 1'.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, and that reference numbers shown in one figure may be used in relation to other figures showing the same embodiment.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### List of references

- 1: Support fixture
- 3: Wind turbine blade
- 5: First frame element
- 7: Second frame element
- 9: Transverse section
- 11: Longitudinal section
- 13: Vertical section
- 15: Transverse section
- 17: Longitudinal section
- 19: Vertical section
- 21: First connection interface
- 23: Second connection interface
- 25: First transverse member
- 27: First transverse member
- 29: Second transverse member
- 31: Second transverse member
- 33: First longitudinal member
- 34: First longitudinal member
- 35: First longitudinal member
- 36: First longitudinal member
- 37: Second longitudinal member
- 38: Second longitudinal member
- 39: Second longitudinal member
- 40: Second longitudinal member
- 41: Vertical member
- 43: Second end of vertical member
- 45: First end of vertical member
- 47: First connection member
- 48: Hoisting part
- 49: Second connection member
- 51: Reinforcement member
- 53: Third connection element (opening)
- 55: Fourth connection element (protrusion)
- 57: Securing assembly
- 59: First locking member
- 61: Second locking member
- 63: Elongated member
- 65: First end of elongated member
- 67: Second end of elongated member
- 69: Pivotal connection
- 71: Bracket
- 73: Groove
- 75: Body of the elongated member
- 77: Third locking member
- 79: Outer surface of third locking member
- 81: Outer thread
- 83: Projection
- 85: Gap
- 87: Engagement part
- 89: First bracket part
- 91: Second bracket part
- 93: Top surface
- 95: Locking surface
- 97: First pivot locking member
- 99: Second pivot locking member
- 101: Flange
- 103: Engagement part
- 105: First flange edge
- 107: Second flange edge
- A: Transverse Axis
- B: Longitudinal axis
- C: Vertical axis
- D: Longitudinal axis of longitudinal members
- E: Rotational (pivot) axis
- F: Direction of rotation

## Claims

1. A support fixture for a wind turbine part comprising:
- a first frame element having a first support section configured to support at least part of the wind turbine part and at least a first connecting part,
- a second frame element having a second support section configured to support at least a part of the wind turbine part and at least a second connecting part configured to connect with the first connecting part of the first frame element,
- a securing assembly having a first operational state where the first frame element is secured to the second frame element, and a second operational state where the first frame element can be disconnected from the second frame element, the securing assembly comprises a first locking member having a first longitudinal axis, where the first locking member is connected via a pivotal connection having a pivot axis to the first frame element, and the securing assembly comprises a second locking member connected with the second frame element configured to receive the first locking member in the second operational state.

2. A support fixture in accordance with claim 1, wherein the securing assembly comprises a plurality of first securing parts and second securing parts.

3. A support fixture in accordance with any one of the preceding claims, wherein the locking member is configured to be pivoted from its first position to its second position when releasing the securing assembly from its first operational state, and vice versa.

4. A support fixture in accordance with any one of the preceding claims, wherein the first locking member pivots relative to the first frame element between the first operational state and the second operational state, and vice versa.

5. A support fixture in accordance with any one of the preceding claims, wherein the securing assembly further comprises at least a third locking member, configured to secure the first locking member in its position in the first operational state.

6. A support fixture in accordance with any one of the preceding claims, wherein the third locking member is configured to provide a tension force extending from the first frame element to the second frame element.

7. A support fixture in accordance with any one of the preceding claims, wherein the first locking member is an elongated member having a first end being pivotally connected to the first frame element and a second end configured to connect to the second locking member of the second frame element.

8. A support fixture in accordance with any one of the preceding claims, wherein an outer surface of the second end of the first locking member comprises threads.

9. A support fixture in accordance with any one of the preceding claims, wherein the first frame element comprises a first alignment member and/or where the second frame element comprises a second alignment member.

10. A support fixture in accordance with any one of the preceding claims, wherein the first locking member comprises a pivot locking member configured to lock the pivotal movement of the first locking member relative to the first frame element, where the pivot locking member is configured to lock the first locking member when it is in cooperation with the second locking member and/or to lock the first locking member when it is in a pivotal position away from the first frame element and/or the second locking member.

11. A support fixture in accordance with any one of the preceding claims, wherein the securing assembly in its first operational state prevents the first frame element to be moved relative to the second frame element, and/or where the securing assembly in its second operational state allows the first frame element to be moved relative to the second frame element.

12. A support fixture in accordance with any one of the preceding claims, wherein the first locking member comprises a second slot configured to receive the first locking member, where the slot comprises a third longitudinal axis parallel and/or coaxial with the first longitudinal axis of the first locking member.

13. A support fixture in accordance with any one of the preceding claims, wherein the second locking member comprises a first slot configured to receive the first locking member, where the slot comprises a second longitudinal axis that is parallel and/or coaxial with the first longitudinal axis of the first locking member.

14. A support fixture in accordance with any one of the preceding claims, wherein the first slot and the second slot are arranged so that the second longitudinal axis and the third longitudinal axis are coextensive.
